# EUROPEAN PATENT SPECIFICATION

(11) **EP 3 403 376 B1**
(45) Date of publication and mention of the grant of the patent: **30.03.2022**
(21) Application number: 16828850.4
(22) Date of filing: 23.12.2016
(51) Int. Cl.: H04L 12/28, H04W 4/00, H04W 4/02, H04L 29/08

(54) **IMPROVEMENTS IN COMMUNICATION SYSTEMS FOR REMOTE DEVICE CONTROL**
VERBESSERUNGEN IN KOMMUNIKATIONSSYSTEMEN ZUR FERNVORRICHTUNGSSTEUERUNG
AMÉLIORATIONS APPORTÉES À DES SYSTÈMES DE COMMUNICATION POUR LA COMMANDE DE DISPOSITIFS À DISTANCE

(30) Priority: 11.01.2016 US 201662277034 P
(43) Date of publication of application: 21.11.2018
(73) Proprietor: Carrier Corporation, Farmington, Connecticut 06032 (US)
(72) Inventor: DAHER, Gabriel, Mascot New South Wales 2020 (AU); JOHAN, Ron, Mascot New South Wales 2020 (AU); WU, Daniel Ming On, Mascot New South Wales 2020 (AU)
(74) Representative: Dehns
(86) International application number: PCT/US2016/068508
(87) International publication number: WO 2017/123406

(56) References cited:
- US-A1- 2012 172 027
- US-A1- 2015 095 774

## Description

### BACKGROUND

The present disclosure relates generally to improvements in communication systems and can be implemented in a number of mobile device applications, including, but not limited to remote device control when a triggering event is detected.

With the ready availability of mobile terminals such as smart telephones there is an increasing realization by users that security and home automation systems can be remotely controlled manually or controlled automatically. For example, a user can control a home security system to arm or disarm. This control command can be triggered by the proximity of the user to their premises as determined by the location of the user's mobile phone. The use of hysteresis to prevent retriggering at a wireless boundary such as at a geofence boundary or cell phone cell boundary can also be implemented.

A number of such systems have been disclosed which utilize one or more network-based servers to communicate with the user's mobile terminal to determine the user's location. For example, the server identifies that the mobile terminal has crossed one or more geographical boundary (geofence) and signals to the home security system or the home automation system to change state.

These systems have a number of concerns and possible short comings that may discourage their application by users. For example, privacy of the user and the user's information is a concern because, for example, the server may be aware of the user's every movement at all times. Security is also a concern because should the server be successfully breached by hackers, then the daily movements of all associated users will be available to the hackers and their associates as well as the users' stored information and possibly allow access and control of the users' devices. Reliability is also a concern because server-based systems generally operate with a centralized database. The use of a database to control message flows may introduce a potential single point of failure. This is because of the complex structure of database software and the interlinking of the database fields. Thus a traffic flow control operation involves a large number of computer operations (flops). This in turn slows the operation and increases the possibility of the occurrence of an error or signaling network malfunction. Further, response speed is a concern because servers operate a system of store- and-forward whereby every message received by the server is stored in the database and forwarded either to the customer terminal or to the mobile terminal. This increases system response times and leads to poor user experience especially as the number of users increases.

Additionally, households may be fitted with two or more systems, such as an alarm system and a home automation system, and the systems may have incompatible signaling or communication protocols requiring the user to utilize separate interfaces to, for example, arm the alarm system and turn off the heating system.

One or more embodiments as described herein set out to address one or more of the problems with the existing arrangements and implement a system which provides security and reliability and may further deliver a good user experience.

US 2012/172027 A1 discloses a geofence service which enables various remote control and automatic operations based on a user's current geographic position as determined by the user's mobile device's current geographic location.

### SUMMARY

The invention is defined by the independent claims, while the dependent claims define detailed embodiments.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The foregoing and other features, and advantages of the present disclosure are apparent from the following detailed description taken in conjunction with the accompanying drawings in which:
Figure 1 illustrates a block diagram illustrating basic elements of a network architecture, including alarm delivery, network management and remote control according to one or more embodiments of the disclosure.
Figure 2 illustrates a flow diagram illustrating interactions between the various subsystems of the mobile terminal and the customer terminal used according to one or more embodiments of the disclosure.
Figure 3 illustrates a block diagram illustrating a network device (3.40) and associated server (3.30) wherein the network device is controlled using a mobile terminal via proprietary routers (3.14) without the involvement of the customer terminal.
Figure 4 illustrates a flow diagram associated with the system of Figure 3 illustrating interactions between a mobile terminal and a server via the proprietary routers used to control a remote network device such as a thermostat.
Figure 5 illustrates a block diagram illustrating additional features of a network including a mobile terminal controlling one or more customer terminals and one or more network devices via proprietary routers whereby the customer terminal intermediates the communication between the mobile terminal and the one or more network-based servers used to control the network devices.
Figure 6 illustrates a flow diagram illustrating interactions between various functional blocks associated with the network detailed in Figure 5.
Figure 7 illustrates a block diagram of the customer terminal illustrating the functional blocks used according to one or more embodiments of the disclosure.
Figure 8 illustrates a network diagram illustrating additional features of a network including the utilization of a local area wireless network such as Z-Wave to control home automation devices according to one or more embodiments of the disclosure.
Figure 9 illustrates an arrangement which enables a customer terminal to communicate with an operable device (9.40) having a different signal protocol from that of the customer terminal controllable via a network server (9.30) according to one or more embodiments of the disclosure.
Figure 10 illustrates a protocol translator according to one or more embodiments of the disclosure.
Figure 11 illustrates an exemplary message format for a message sent from the customer terminal according to one or more embodiments of the disclosure.
Figure 12 illustrates an exemplary message format for a message sent from the protocol translator according to one or more embodiments of the disclosure.
Figure 13 illustrates an exemplary message format for a message sent from the home automation system according to one or more embodiments of the disclosure.
Figure 14 illustrates a flowchart of a method for routing signals and controlling a plurality of independent home devices using a mobile device according to one or more embodiments of the disclosure.
Figure 15 illustrates a flowchart of some additional operations for a method for routing signals and controlling a plurality of independent home devices using a mobile device according to one or more embodiments of the disclosure.
Figure 16 illustrates system having more than one mobile device associated with a customer terminal according to one or more embodiments of the disclosure.

### DETAILED DESCRIPTION

One or more embodiments described herein are directed to a method and/or system for routing signals and controlling a plurality of independent home devices using a mobile device or a home based controller. The system includes one or more mobile devices connected to both a proprietary router and one or more of a plurality of independent home devices used by the user. The mobile device is adapted to control the home devices via a home based controller. Control of the home devices may be via a home automation server. This method and system could improve the privacy of systems that are accessed or controlled remotely using a portable device such as a mobile telephone. The method and system also have application in the field of geolocation. According to one or more embodiments of the disclosure, the system and method may be used to improve the user experience associated with remotely controlling devices generally, but will be described with reference to security and home automation systems. According to one aspect of the disclosure, the use of a distributed network architecture to facilitate communications between customer terminals and mobile terminals is disclosed.

Some embodiments utilize a proprietary router The proprietary router is one which is accessible via a proprietary message from an associated edge device and which processes such proprietary messages in a predetermined manner. The proprietary router is configured to connect specified terminals to associated terminals. The proprietary router is adapted to terminate an incoming tunnel and establish an outgoing tunnel. An associated edge device may have access to a dedicated port of a proprietary router. Proprietary routers can be accessed via a public network.

A proprietary router can be adapted to be associated with a wide area network (WAN), while remaining under the control of a proprietor of a dedicated communication network, rather than being under the control of the WAN operator. The proprietary router can have proprietary interfaces adapted to communicate with associated terminals. The network includes one or more proprietary routers.

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "X.a" and a similar feature in FIG. Z may be labeled "Z.a." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

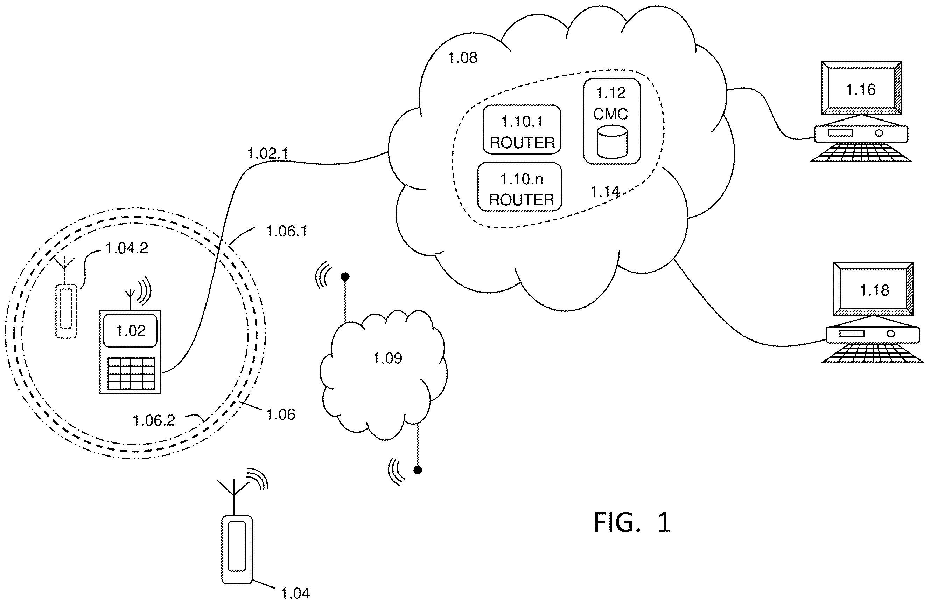

Figure 1 depicts a block diagram illustrating basic elements of network architecture, including alarm delivery, network management and remote control according to one or more embodiments of the disclosure. Specifically, Figure 1 shows an alarm reporting network according to an embodiment. A mobile terminal (1.04) is in communication with a customer terminal (1.02) via a virtual private network implemented over the internet (1.08). According to one embodiment, both the source and destination terminals may be in point-to-point communication with the proprietary router to establish an effective end-to-end secure tunnel. The customer terminal (1.02) may be a gateway, an alarm system, or a general device controller. The mobile terminal (1.04) may also be called a mobile user device (1.04) and can be, for example, a smartphone, tablet computer or the like with a control application that implements the disclosed method loaded and running on the mobile user device (1.04).

The network includes a plurality of customer terminals such as customer terminal (1.02), wide area networks such as WAN 1 (1.08), and WAN 2 (1.09), routers 1.10.1 through to 1.10.n. The network also includes a security company automation system, which can also be called a third party alarm automation system 1.18, a customer terminal network management terminal 1.16, as well as mobile terminals (1.04).

The routers can be dedicated routers such as the proprietary routers described in our co-pending patent application US62/083,538. As well as performing normal router functions, these routers can provide dedicated communication connections between devices registered with the routers. A communication management center (1.12) can be provided to manage the configuration of the dedicated routers.

The customer terminal can, for example, be adapted to control an alarm system including one or more wired or wireless sensors installed at the premises. In addition, in some embodiments, the customer terminal can be adapted to control a first home automation system installed at the premises. According to an embodiment, each mobile terminal (1.04) is associated with one or more customer terminals (1.02).

The mobile terminal (1.04) can include geolocation functionality. The mobile terminal (1.04) is programmable with an App which may be downloaded by the user or their agent from an internet-based third party App repository.

The mobile terminal (1.04) App is configured by the user or their agent with the geographical location of each associated customer terminal. The configuration may take the form of direct entry of coordinates indicating a map location or when the mobile terminal is physically present at the location of the customer terminal, the user or their agent may nominate that location in the App via an input field.

The App can be provided preloaded with a radius so that the radius and the location of the customer terminal as detailed above, together define a geofence with a single circular boundary as disclosed in Arkenstone US5470233. The mobile terminal (1.04) App is alerted by a trigger message generated by the intrinsic mobile terminal (1.04) geolocation capabilities that the geofence has been crossed in an inbound (in the direction towards the center of the circle) or outbound (in the direction away from the center of the circle) direction.

Hysteresis can be used to inhibit flip-flopping between states when the mobile terminal is close to the geofence, in a manner analogous to the use of hysteresis in the GSM system to avoid repetitive cell switching between adjacent cells. Upon crossing of the geofence boundary (1.06) in either inbound (1.06.2) or outbound (1.06.1) direction, the mobile terminal (1.04) App may provide the user an indication via the mobile terminal's user interface, that the geofence has been crossed. In addition, the mobile terminal (1.04) App sends a message to the customer terminal (1.02) that the geofence has been crossed and the direction of travel of the mobile terminal (inbound or outbound) relative to the customer terminal (1.02). The message is sent via the proprietary network comprised of proprietary routers (1.10.1 to 1.10.n). When the customer terminal receives either message it responds in a manner that was previously programmed by the user or their agent. For example, the user may have programmed the customer terminal to turn on the porch light when the geofence boundary is crossed in an incoming direction after 6 PM.

The App may also be adapted to obtain information from on-line sites, such as, for example the weather bureau and use the information to trigger the sending of specific instructions to the customer terminal. The App can be programmed to periodically retrieve information from the on-line site and determine if the information is within a range which requires the App to send instructions to the customer terminal. For example, if a storm is predicted, the App can use this information to instruct the customer terminal to close servo-operated shutters. The shutters or other operable devices can be controlled via wired or wireless communication links with the customer terminal and similarly when the storm has passed the App may send this information to instruct the customer terminal to open servo-operated shutters.

The customer terminal (1.02) may send a message to the mobile terminal (1.04) App to acknowledge the message it had sent and also to convey information about the status of the customer terminal after the completion of the programmed task initiated by the message from the mobile terminal (1.04) or in response to the action initiated by retrieving the on-line information.

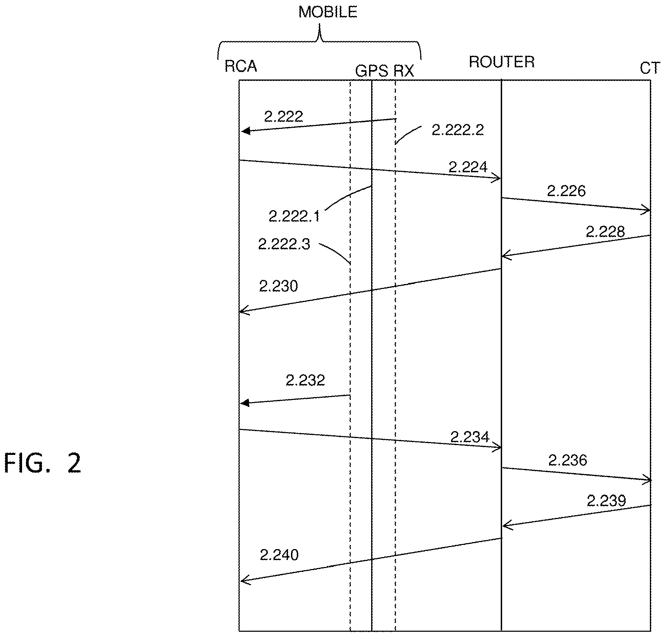

Figure 2 is a flow diagram illustrating interactions between the various subsystems of the mobile terminal and the customer terminal used according to one or more embodiments of the disclosure. Specifically, Figure 2 details the actions carried out by the subsystems described above. The process starts with the mobile terminal crossing the geofence in an outbound direction (2.222.2) which is identified by the GPS (2.222.1) Receiver (RX). The GPS Receiver subsystem notifies (2.222) the Remote Control App (RCA) in the mobile terminal. The RCA sends a message (2.224) to the proprietary router (2.224), that forwards it (2.226) to the customer terminal (CT). The customer terminal sends a message (2.228) to the proprietary router to acknowledge the message it had received and also to convey information about the status of the customer terminal after the completion of the programmed task initiated by the message from the mobile terminal. The proprietary router forwards the message (2.230) to the mobile terminal RCA.

A similar process takes place when the mobile terminal crosses the geofence in an inbound direction (2.222.3). This condition is identified by the GPS Receiver which notifies (2.232) the RCA in the mobile terminal. The RCA sends a message (2.234) to the proprietary router, that forwards it (2.236) to the customer terminal. The customer terminal sends a message (2.239) to the proprietary router to acknowledge the message it had received and also to convey information about the status of the customer terminal after the completion of the programmed task initiated by the message from the mobile terminal. The proprietary router forwards the message (2.240) to the mobile terminal RCA.

In response to receiving a notification that the mobile device has crossed the geofence, the customer terminal can be programmed to initiate one or more operations of the alarm system or home automation devices which the customer terminal is configured to control.

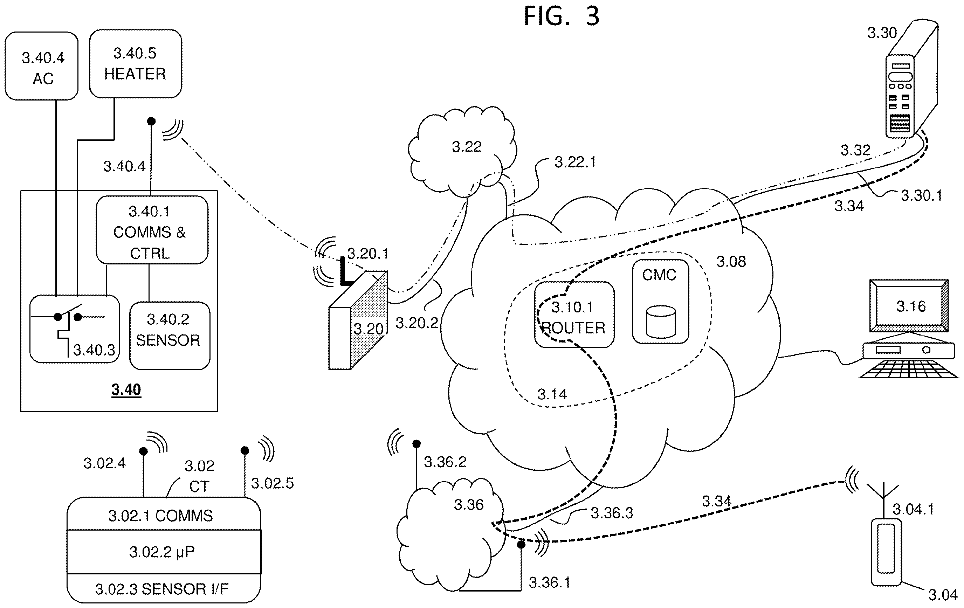

Figure 3 is a block diagram illustrating a network device (3.40) and associated server (3.30) wherein the network device is controlled using a mobile terminal (3.04) via proprietary routers (3.14) without the involvement of the customer terminal. Specifically, Figure 3 details an example of the remote control network wherein the RCA is used to control a remote network device (3.40) which may be collocated with the customer terminal (3.02), the network device (3.40) being managed by a network-based server (3.30).

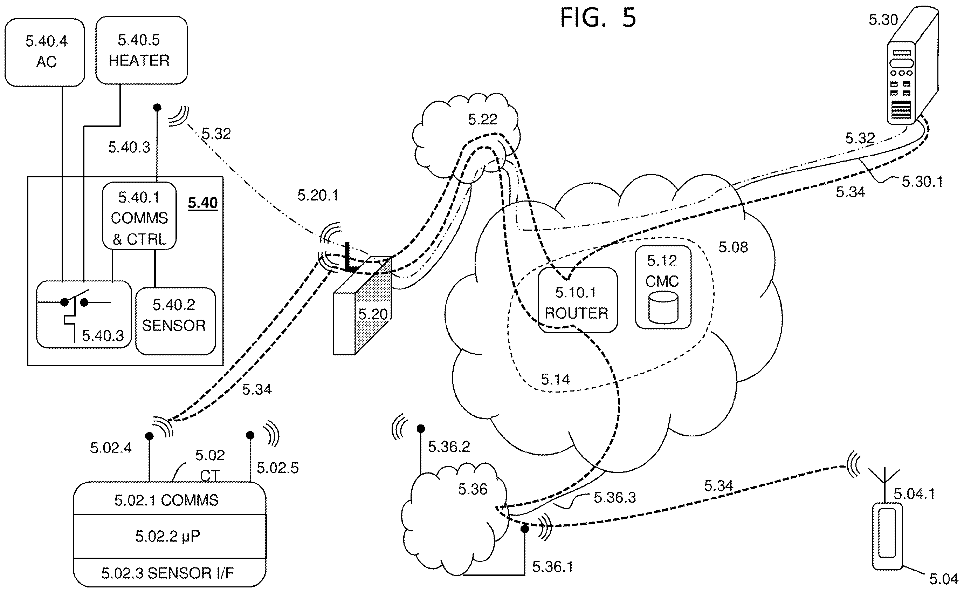

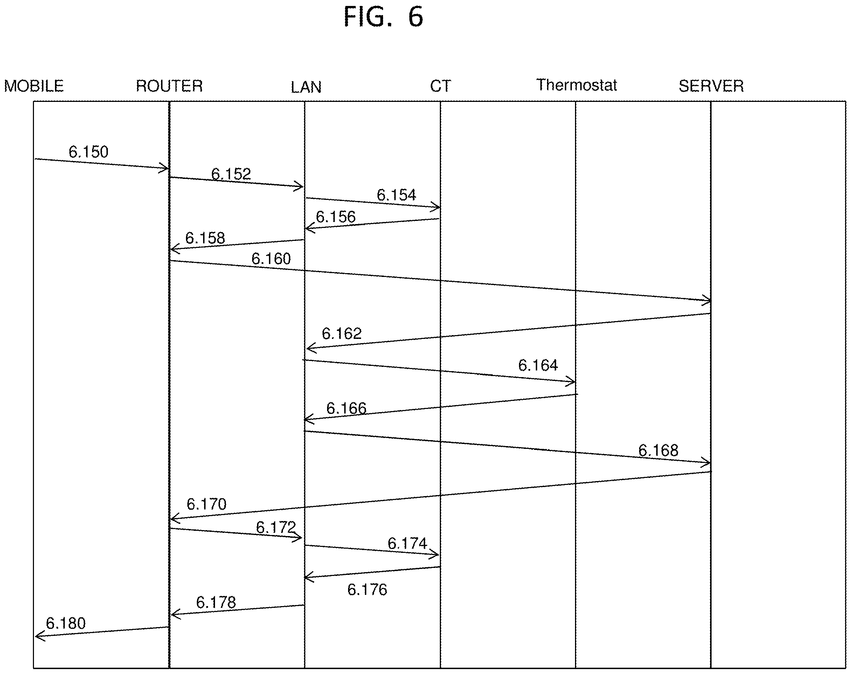

Also, as shown in Figure 3, an alarm management terminal (3.16), which is adapted to manage an alarm system in communication with customer terminal (3.02), can be included. The signal protocol used for the alarm system can be a proprietary protocol associated with an alarm management terminal (AMT) (3.16) as discussed in US7253728, and the customer terminal can be similar to that discussed in US62/083,538. The customer terminal can be configured to forward messages from the mobile device (3.04) to the AMT (3.16) and to the home automation server (HAS) (3.30) as detailed in Figure 5 and Figure 6. The protocols used by the AMT and the HAS can be different, as can the protocols used by the alarm system and the operable devices, such as 3.40. Thus, the protocol of the operable device can be compatible with that used by the HAS, and the protocol used by the alarm system can be compatible with that used by the AMT. In this example, the customer terminal protocol is not compatible with the operable devices.

The network device (3.40) may be a home automation device such as a thermostat equipped with sensors (3.40.2) and power control interfaces such as relays (3.40.3) to control HVAC devices such as air-conditioners (3.40.4) and space heaters (3.40.5). As well as being locally controllable via a local user interface, the network device (3.40) communicates using the communication and control device (3.40.1) and antenna (3.40.4) via the customer's local area network (LAN) to HAS (3.30) located off-site, for example in what has been referred to in the literature as the 'cloud'. The HAS (3.30) will be referred to herein as a home automation server or HAS for short. The network device (3.40) can be equipped with a wireless link, such as WiFi interface (3.40.4), which is in communications with the customer premises network router (3.20) through its WiFi interface (3.20.1). The customer premises network router (3.20) can be connected to the internet (3.22 and 3.08) via a last-mile access technology such as ADSL, VDSL2, optical fiber, WiMax, cellular, such as 3G, 4G and 5G etc.

The mobile terminal (3.04) is able to control the network device (3.40) by establishing a secure IP connection (3.34) via one or more proprietary routers (3.14, 3.10.1) to the network device's HAS (3.30) and by establishing a two-way communication session with the network device's HAS (3.30). The HAS (3.30) is in two way communications with the network device (3.40) through an IP communications paths (3.22.1, 3.20.2) over the internet (3.08). The HAS (3.30) converts the control instructions from the mobile terminal (3.04) to a message format compatible with the network device (3.40) and communicates the resultant messages to the network device (3.40). The HAS (3.30) also translates the responses from the network device (3.40) to a format compatible with the mobile device (3.04) and forwards these messages to the mobile terminal (3.04).

The customer terminal (3.02) may include a set of antennas (3.02.4, 3.02.5) for communication with other devices includes, for example, the network device (3.40), the mobile device (3.04), and the HAS (3.30). The customer terminal (3.02) can also include a sensor I/F (3.02.3), a processor (3.02.2), and communication circuitry and devices (3.02.1).

A computer terminal (3.16) may also be included, from which a user could login and access a portal or an instance of the control application. Therefore, the user could send and receive similar control signals from the computer terminal (3.16) for controlling the network device (3.40) and customer terminal (3.02).

The mobile device (3.04) can include a wireless antenna (3.04.1) through which the mobile device (3.04) is able to transmit and receive wireless signals including the control signal. Additionally, the overall system may include a cellular network device (3.36) which can include one or more cellular towers (3.36.1, 3.26.2). The cellular network device (3.36) can provide a wireless communication path (3.34) to communicate with the mobile device (3.04) and a backbone communication path (3.36.3) which can be wired or wireless that connects the wireless network (3.36) with the wide area network such as the internet (3.08) to which other device elements such as the customer terminal (3.02), the network device (3.40), and the HAS (3.30) are connected.

The HAS (3.30) may have a data communication path (3.30.1) over which the HAS can communicate with other devices connected through the network. For example, the HAS (3.30) can communicate using communication path (3.34) with the mobile device (3.04) through the network that includes the router (3.10.1). The HAS (3.30) can also communicate using another known path of communication (3.32) with the network device (3.40) through the network. Path 3.32 may or may not include a path through proprietary router network 3.14.

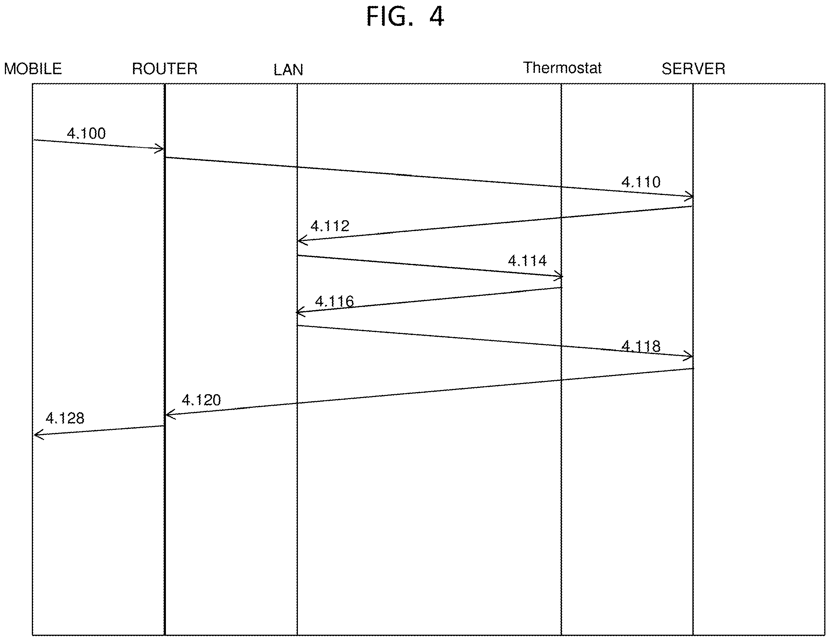

Figure 4 is a flow diagram associated with the system of Figure 3 illustrating interactions between a mobile terminal and a HAS via the proprietary routers used to control a remote network device such as a thermostat. Particularly, Figure 4 details the message flow associated with the system of Figure 3 to control a remote network device by a mobile terminal as described above. For example, when a user with a mobile terminal either crosses a geofence as described above, or directly interacts with the mobile terminal via the user interface, a message (4.100) is sent by the mobile terminal to the proprietary router, which forwards the message (4.110) to the HAS. If required, the HAS may translate the message from the proprietary router format to the network device format and sends it (4.112) via the internet to the user's local area network (LAN). The message is then sent to the network device - in this case a thermostat.

The network device may respond to the server (4.116) to acknowledge the message or to deliver status indication to the server via the LAN which routes the message (4.118) over the internet to the server. The server in-turn may translate the message to a format compatible with the RCA and sent it (4.120) via the proprietary routers to the RCA executing on the mobile terminal (4.128).

Figure 5 is a block diagram illustrating additional features of a network including a mobile terminal controlling one or more customer terminals (5.02) and one or more network devices (5.40) via proprietary routers (5.14 and 5.10.1) whereby the customer terminal (5.02) intermediates the communication between the mobile terminal (5.04) and the one or more network-based HAS (5.30) used to control the network devices (5.40). Particularly, Figure 5 details a remote control network wherein a remote network device (5.40) is controlled by a mobile terminal (5.04) or by a customer terminal (5.02) which may be controlled by a mobile terminal (5.04). One or more additional home automation systems or devices which use a protocol which is not compatible with the customer terminal may also be installed at the premises.

For example, the RCA executing on the mobile terminal (5.04) establishes point-to-point communications with the customer terminal (5.02) via secure IP VPN establishing a communication path (5.34) through the network and multiple devices. Depending on the messages received by the customer terminal (5.02) from the RCA (5.04) or other sources, the customer terminal (5.02) may control the network device (5.40) through the HAS (5.30) by translating the messages received from the RCA or other sources, from the RCA message format to the HAS (5.30) message format. The message flow (5.34) between the customer terminal (5.02) and the HAS (5.30) is via the network setup by the proprietary routers (5.14).

The RCA executing on the mobile terminal (5.04) may also enable concurrent communication with both the HAS (5.30) and the customer terminal (5.02) as detailed in both Figure 3 and Figure 5 so that the RCA may be programmed to convert a user command into two separate commands, one routed to the customer terminal (5.02) and the other routed to the network device (5.40) along the known path of communication (5.34) through the network.

The customer terminal (5.02) may include a set of antennas (5.02.4, 5.02.5) for communication with other devices includes, for example, the network device (5.40), the mobile device (5.04), and the HAS (5.30). The customer terminal (5.02) can also include a sensor I/F (5.02.3), a processor (5.02.2), and communication circuitry and devices (5.02.1).

The mobile device (5.04) can include a wireless antenna (5.04.1) through which the mobile device (5.04) is able to transmit and receive wireless signals including the control signal. Additionally, the overall system may include a cellular network device (5.36) which can include one or more cellular towers (5.36.1, 5.26.2). The cellular network device (5.36) can provide a wireless communication path (5.34) to communicate with the mobile device (5.04) and a backbone communication path (5.36.3) which can be wired or wireless that communications with other device elements in the networks and attached to the network such as the customer terminal (5.02), the network device (5.40), and the HAS (5.30).

The HAS (5.30) may have a data communication path (5.30.1) over which the server can communicate with other device connected through the network. For example, the HAS (5.30) can communicate using a known path of communication (5.34) with the mobile device (5.04) through the network that includes the routers (5.10.1, 5.12, 5.14). The HAS (5.30) can also communicate using another known path of communication (5.32) to communicate with the network device (5.40) through the network.

The network device (5.40) may be a home automation device such as a thermostat equipped with sensors (5.40.2) and power control interfaces such as relays (5.40.3) to control HVAC devices such as air-conditioners (5.40.4) and space heaters (5.40.5). As well as being locally controllable via a local user interface, the network device (5.40) communicates using the communication and control device (5.40.1) and antenna (5.40.3) via the customer's local area network (LAN) to HAS (5.30) located off-site, for example in what has been referred to in the literature as the 'cloud'. The network device (5.40) can be equipped with a wireless link, such as WiFi interface (5.40.3), which is in communications with the customer premises network router (5.20) through its WiFi interface (5.20.1). The customer premises network router (5.20) can be connected to the internet (5.22 and 5.08) via a last-mile access technology such as ADSL, VDSL2, optical fiber, WiMax, cellular, such as 3G, 4G and 5G etc.

Figure 6 is a flow diagram illustrating interactions between various functional blocks associated with the network detailed in Figure 5. Specifically, Figure 6 outlines a message flow that may be associated with the embodiment of Figure 5. The RCA executing on the mobile terminal may send a message (6.150) to notify or control the customer terminal and the associated network device when triggered by a predefined condition, directed by a user or as a result of the mobile terminal crossing a geofence as detailed above. The message from the RCA is received by the proprietary routers that forward the message (6.152) to the user's LAN. The customer terminal which is connected to the LAN receives the message (6.154) in LAN format.

As part of taking action on the received message the customer terminal may need the network device to be accessed or controlled. Accordingly, the customer terminal may direct a message (6.156) to the network device HAS, which identifies the action that the network device is instructed to take. This message is sent over the LAN and is forwarded (6.158) to the proprietary routers. The proprietary routers forward the message (6.160) to the HAS (shown as SERVER).

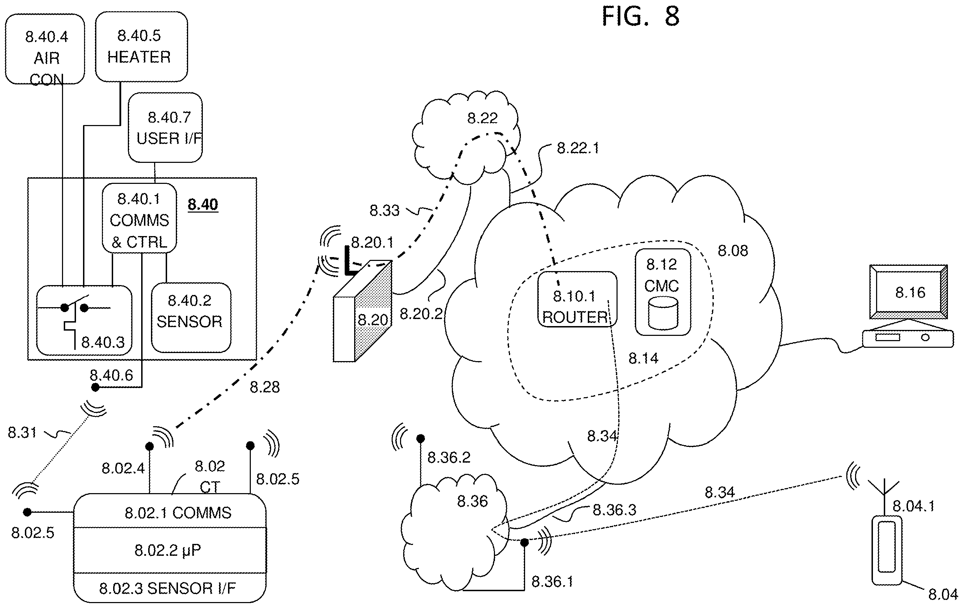

The message from the customer terminal may be sent in customer terminal format and may be reformatted by the proprietary routers or a translation engine (see, e.g., 8.24 in Figure 8) associated with the proprietary routers into HAS format. The HAS may change the format of the message to network device format before sending it via the LAN (6.162) to the network device (6.164).

The network device responds to the message received from the HAS (6.166) over the LAN, which is forwarded via the internet (6.168) to the HAS. The HAS modifies the response from the network terminal as required and sends the response (6.170) to the proprietary routers. The proprietary routers may modify the response from the HAS to convert the message format from HAS format to customer terminal format and send the resultant reformatted message via the user's LAN (6.172) to the customer terminal (6.174).

The customer terminal may direct its response to the RCA via the LAN (6.176), through the proprietary routers (6.178) to the RCA executing on the mobile terminal (6.180).

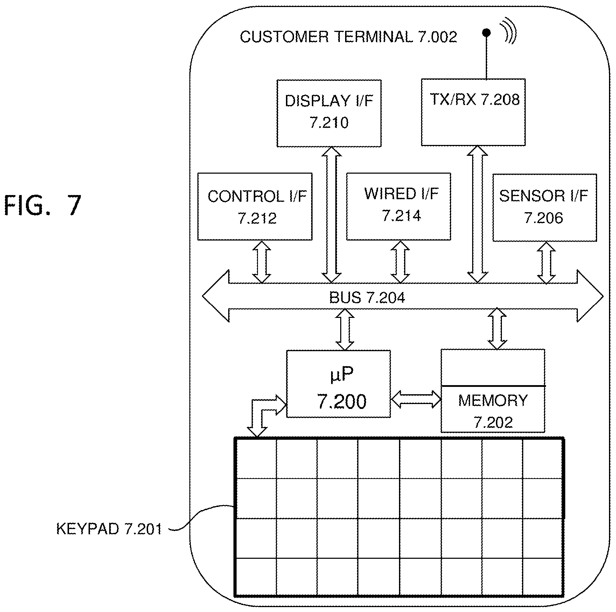

Figure 7 is a block diagram of the customer terminal illustrating the functional blocks used according to one or more embodiments of the disclosure. Specifically, according to one or more embodiments, Figure 7 details the customer terminal (7.002) which comprises:

(Optional) Keypad (7.201) - a basic set of buttons to provide a rudimentary user interface; (Optional) Display (7.210) - a display used to provide user feedback and may include individual LEDs, LCD or a touch-screen; Wireless IP interface (7.208) - may include WiFi (LAN), or WAN including cellular, such as 3G, 4G, LTE, 5G and the like; Sensor interface (7.206) - such as wired or wireless security and other sensors such as fire, smoke, heat, water, CO (Carbon Monoxide) etc.; Control interface (7.212) - includes wired outputs such as relay contacts and transistor open-collector outputs as well as wireless home automation devices such as Z-Wave control devices; Microprocessor (7.200) - used to execute the customer terminal firmware using the instructions and data, including user-entered configuration data, stored in Memory (7.202) which may include both volatile and non-volatile memory; (Optional) Wired interface (7.214) - wired connection to LAN; and a bus interface (7.204).

Figure 8 is a network diagram illustrating additional features of a network in the case where the network devices (8.40) are equipped with a means of communication compatible with the customer terminal (8.02). For example, a wireless link (8.31), such as a Z-Wave link can be used by the customer terminal to control the network device (8.40) either directly via the customer terminal (8.02) keypad (7.201) or via mobile device 8.04. When the control is via the mobile device (8.04), the proprietary router (8.10.1) provides a secure path (8.33, 8.28) to the customer terminal (8.02).

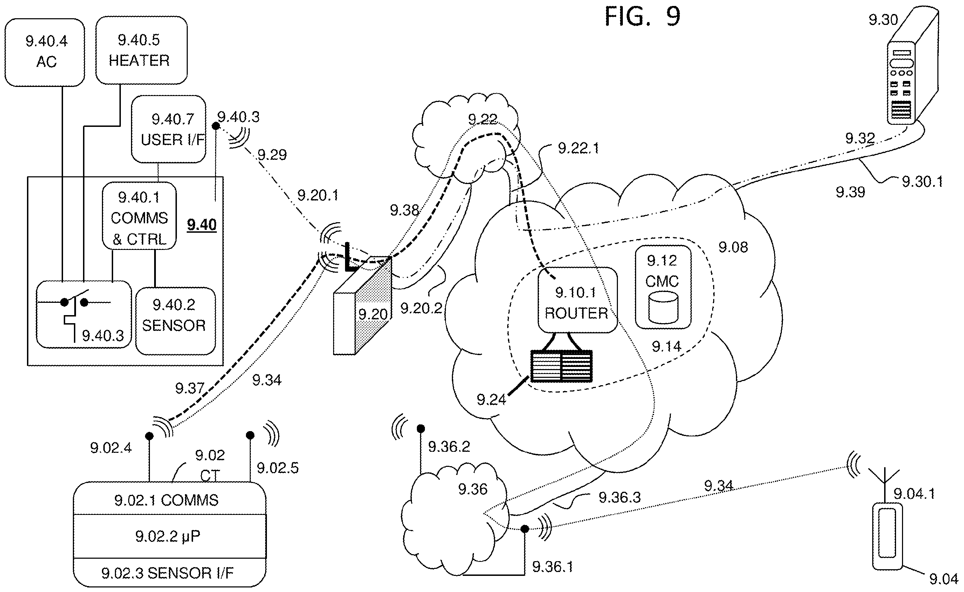

Figure 9 illustrates another embodiment wherein there is no compatible communication link between the customer terminal (9.02) and the network device 9.40.

In this case commands to the network device (9.40), which may originate from the mobile device (9.04) or from the customer terminal keypad (7.201) or from the customer terminal (9.02) itself are sent via proprietary router (9.10.1) to HAS (9.30), and from the HAS (9.30) to the network device 9.40. However, the customer terminal (9.02) may not use a communication and signaling protocol which is compatible with the HAS (9.30). This necessitates a translation of the message protocol used by the customer terminal to the protocol which the HAS (9.30) is adapted to receive. To achieve this, a protocol translator (9.24) is provided. In this embodiment the protocol translator (9.24) is based in the communication network 9.08. The protocol translator (9.24) can be associated with the proprietary router network, and, in this embodiment, it is associated with proprietary router 9.10.1. Depending on the communication systems for which the source and destination terminals are configured, the protocol translator may be configured to convert only the instructions in the message payload from a first signaling protocol to a second signaling protocol, or the translator may be configured to change both the instructions and the message header from a first communication protocol to a second communication protocol.

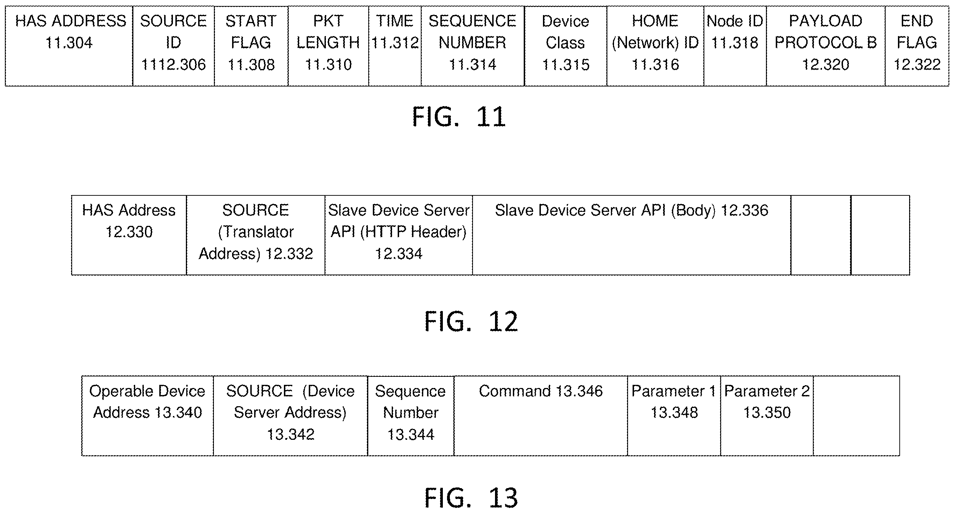

According to one or more embodiments, the Z-Wave messages to control the associated network devices are incorporated into one or more IP messages by the customer terminal (9.02) and sent over an IP point-to-point connection (9.37) via its WiFi LAN interface (9.02.4) to the customer's network router (9.20). The customer's network router (9.20) routes the messages over the internet (9.22 and 9.08) to the proprietary router (9.10.1). As described below with reference to Figures 11, 12, and 13, translation engine (9.24) is associated with the proprietary router (9.10.1), and converts the Z-Wave messages to a format compatible with the HAS (9.30) and the HAS (9.30) translates the messages from the HAS to a format compatible with the network devices (9.40) which are forwarded by the HAS (9.30) to control the network device (9.40).

According to one or more embodiments, the translation engine (9.24) can be incorporated in a separate platform from the proprietary router (9.10.1).

According to one or more embodiments, the proprietary router (9.10.1) maintains a register used to maintain the association between customer terminal (9.04) identifiers and associated network device identifiers (9.40). In the present embodiment, the proprietary router (9.10.1) can be adapted to provide two-way mapping between Z-Wave commands issued by customer terminals (9.02) and network device commands issued by the HAS (9.30).

According to one or more embodiments, the customer terminal (9.02) includes a set of antennas (8.02.4, 8.02.5) for communication with other devices including, for example, the mobile device (8.04), and the HAS (9.30) via the customer premises LAN 9.20 or the cellular network (9.02.5). As described in more detail above with reference to Figure 7, the customer terminal (9.02) can also include a sensor interface (9.02.3) (e.g., for fire alarm sensors), a processor (9.02.2), and communication circuitry and devices (9.02.1).

According to one or more embodiments, the mobile device (9.04) can include a wireless transceiver antenna (9.04.1) through which the mobile device is able to transmit and receive wireless signals including the control signal. Additionally, the overall system may include a cellular network (9.36) which can include one or more cellular towers (9.36.1, 9.26.2). The cellular network (9.36) can provide a wireless communication path to communicate with the mobile device (9.04) and a backbone communication path (9.36.3) which can be wired or wireless that links the cellular network with the internet (9.08) to provide communication between the mobile device (9.04) and other devices connected to the network such as the customer terminal (9.02), the network device (9.40), and the HAS (9.30).

According to one or more embodiments, the HAS (9.30) has a data communication path (9.30.1) over which the server can communicate with other device connected through the network. For example, the HAS (9.30) can communicate using communication path (9.34) with the mobile device (9.04) through the network that includes the router (9.10.1). The HAS (9.30) can also communicate using another communication path (9.32) to communicate with the network device (9.40) through the network.

According to one or more embodiments, the network device (9.40) may be a home automation device such as a thermostat equipped with sensors (9.40.2) and power control interfaces such as relays (9.40.3) to control HVAC devices such as air-conditioners (9.40.4) and space heaters (9.40.5). As well as being locally controllable via a local user interface (9.40.7), the network device (9.40) communicates using the communication and control device (9.40.1) and antenna (9.40.3) via the customer's local area network (LAN) to HAS (9.30) located off-site, for example in what has been referred to in the literature as the 'cloud'. The network device (9.40) can be equipped with a wireless link, such as WiFi interface (9.40.3), which is in communications with the customer premises network router (9.20) through its WiFi interface (9.20.1). The customer premises network router (9.20) can be connected to the internet (9.22 and 9.08) via a last-mile access technology such as ADSL, VDSL2, optical fiber, cellular, such as 3G, 4G and 5G etc.

Further, according to one or more embodiments, Figure 9 illustrates an arrangement in which the customer terminal 9.02 is enabled to communicate with the operable devices (9.40) despite the operable devices having a different communication and signaling protocol from that used by the customer terminal (9.02). In this embodiment, the mobile device 9.04 is also enabled to communicate with the operable devices via the customer terminal 9.02.

In this example, it will be assumed that the customer terminal is adapted to communicate by a first protocol, for example Z-Wave, while the operable devices use a second protocol, such as WiFi.

Where a message is to be sent from the customer terminal (9.02) to the operable device (9.40), a Z-Wave message is formed into IP packets by the customer terminal (9.02) and sent to the proprietary router (9.10.1) either via the premises LAN 9.20 via either a wired or wireless link, or via packet wireless via an inbuilt wireless link (9.02.5) in the customer terminal 9.02 to wireless network 9.36. The proprietary router sends the message to an associated protocol translator 9.24 which then disassembles the message and converts the message contents to a third protocol suitable for the HAS (9.30). The message is then repacketized and sent to the HAS (9.30). The HAS in turn converts the message from the third protocol to the second protocol and forwards the message to the operable device (9.40). This process is schematically illustrated by the message packets shown at Figures 11, 12, and 13.

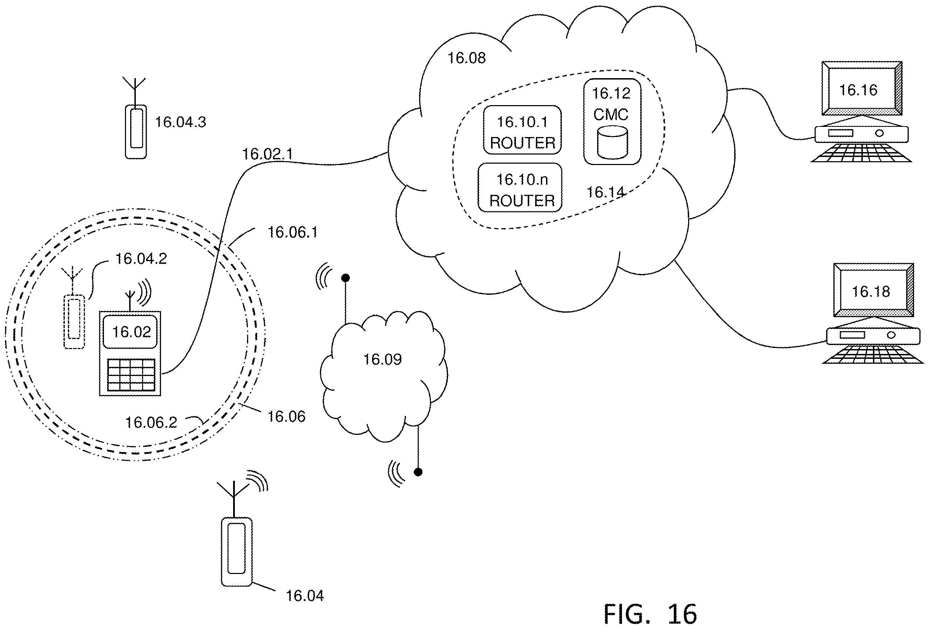

Figure 16 illustrates a further embodiment of the invention. In this embodiment, more than one mobile device (16.04, 16.04.2, 16.04.3) configured with the App (RCA) can be associated with the customer terminal (CT) (16.02). When the CT is notified by the App in a first of the associated mobile devices that a geofence crossing has taken place, the CT is adapted to poll the other associated mobile devices to determine whether to act on the notification of a geofence crossing by the first mobile device associated with the CT (16.02).

As shown in Figure 16, a first mobile device 16.04 and a second mobile device 16.04.3 are shown outside the geofence 16.06, and a second mobile device 16.04.2 is shown inside the geofence.

When the mobile device 16.04 crosses the geofence, the App in that mobile device will notify the CT (16.02). However, the CT in this embodiment is programmed to conduct a polling operation of any other mobile devices which have been associated with the CT (16.02) to determine the location of the other mobile devices in relation to the geofence.

If, for example, no other mobile device is within the geofence, the CT (16.02) will implement a first pre-programmed routine which may be dependent on time of day, season, temperature, etc.

However, if a mobile device is located within the geofence, the CT (16.02) can be programmed to implement a second set of actions or to ignore the new geofence crossing.

Where a second mobile device is within the geofence, the CT (16.02) can be programmed to implement a second set of actions on notification of the crossing of the geofence by the first mobile device. The second set of actions may be dependent on the identification of the mobile device. Thus each of the mobile devices can be used to trigger specific actions while taking account of the presence of another mobile device within the geofence.

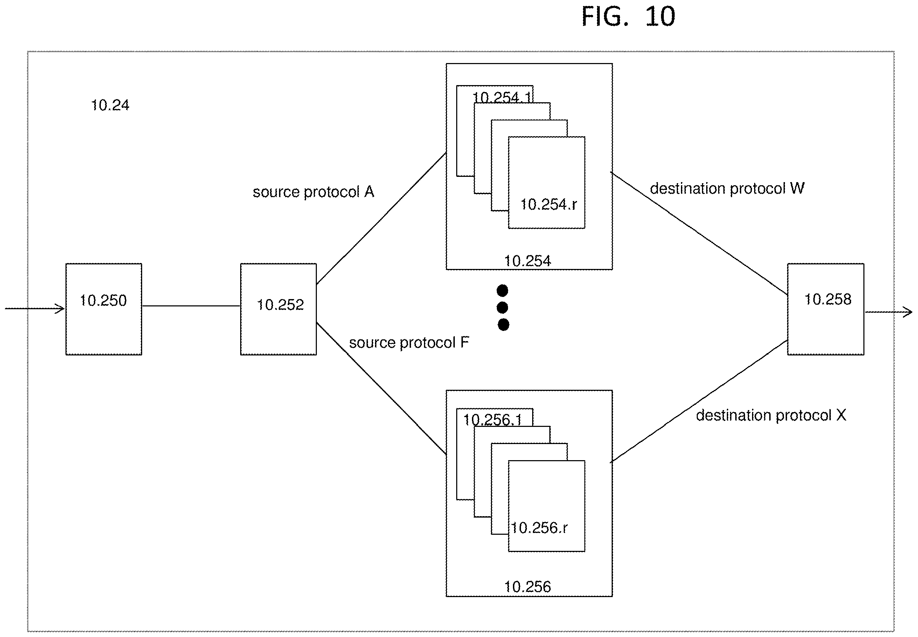

Figure 10 illustrates a web-based protocol translator 10.24 adapted to convert any of a first set of communication and signaling protocols to any of a second set of communication and signaling protocols in accordance with one or more embodiments. The protocol translator includes a packet disassembler 10.250, a protocol identifier 10.252. and one or more multiple protocol translation engines 10.254 ... 10.256, and a packet assembler 10.258. Each translation engine can consist of a set of translation tables or conversion algorithms 10.254.1 ... 10.254.r, adapted to convert a specific incoming protocol to a designated output protocol using the corresponding one of the set of translation tables.

The incoming message is un-packetized at disassembler 10.250, the address information and other required identification information being preserved. The incoming is protocol identified and the outgoing protocol ascertained either from information in the incoming message or from information programmed into the protocol translator. For example, the translator may include information correlating destination addresses with the required protocol for that address.

When the incoming protocol is ascertained, the message to be translated is directed to the appropriate set of translation tables or algorithm for the identified incoming protocol and the appropriate table converting the incoming protocol to the protocol for the destination address is chosen.

A new message with appropriate header addresses and identification information is then assembled with the translated message.

In the case where there is only one known incoming protocol and only one known outgoing protocol, identification of the incoming and outgoing protocols is unnecessary, and only a single translation table is required.

As shown in Figure 11, and in accordance with one or more embodiments, the customer terminal assembles a message with header fields, e.g., HAS address (11.304), source ID (11.306), start flag (11.308), packet length (11.310), time (11.312), sequence number (11.314), device class (11.315), home ID (11.316), node ID (11.318), and payload (11.320). An end flag (11.322) indicates the end of the packet. The device class and node ID serve to identify the operable device to which the message is directed.

In Figure 12. the protocol translator then disassembles the packet from the customer terminal and converts the payload (11.320 in Figure 11) to a format suitable for the HAS, for example an application programming interface (API) format having API header (12.334) and body (12.336). The translator then assembles a second message by adding the HAS address (12.330) as the destination address, the translator address (12.332) as the source address. The second message is then sent to the HAS. Information enabling identification of the target operable device is preserved in this second message to enable the HAS to forward the message to the selected destination device. A mapping capability can be provided in the customer terminal or in the proprietary router to map Node ID to the customer account identifier used by the HAS to identify the network device.

The message prepared by the HAS is shown in Figure 13. The HAS identifies the target operable device and converts the incoming instructions to command 13.346 and parameters 13.348, 13.350 recognized by the operable device, adds the destination address of the target operable device to form a third message and sends the third message to the target operable device.

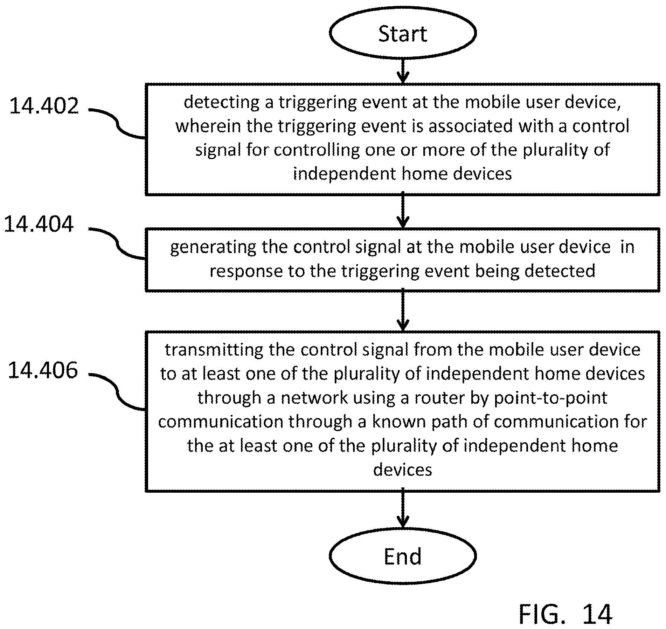

Figure 14 depicts a flowchart of a method for routing signals and controlling a plurality of independent home devices using a mobile device according to one or more embodiments of the disclosure. The method of routing signals and controlling a plurality of independent home devices using a mobile device includes detecting a triggering event at the mobile device, wherein the triggering event is associated with a control signal for controlling one or more of the plurality of independent home devices (operation 14.402). The method also includes generating the control signal at the mobile device in response to the triggering event being detected (operation 14.404). Further, the method includes transmitting the control signal from the mobile device to at least one of the plurality of independent home devices through a network using a router by point-to-point communication through a known path of communication for the at least one of the plurality of independent home devices (operation 14.406).

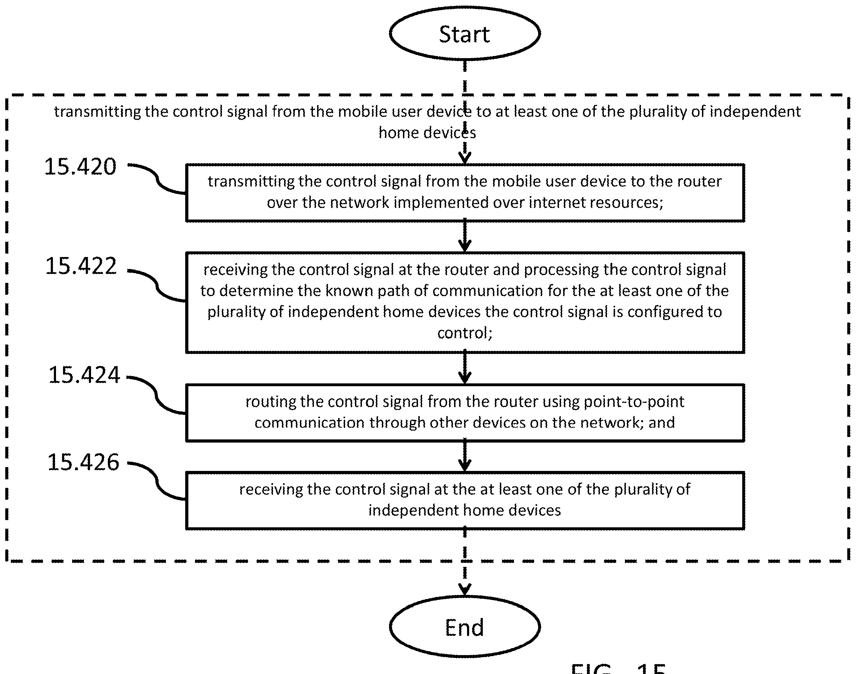

Figure 15 shows a flowchart of some additional operations for a method for routing signals and controlling a plurality of independent home devices using a mobile device according to one or more embodiments of the disclosure. The method includes transmitting the control signal from the mobile device to the router over the network implemented over internet resources (operation 15.420). The method also includes receiving the control signal at the router and processing the control signal to determine the known path of communication for the at least one of the plurality of independent home devices the control signal is configured to control (operation 15.422). Further, the method includes routing the control signal from the router using point-to-point communication through other devices on the network (operation 15.424). The method also includes receiving the control signal at the at least one of the plurality of independent home devices (operation 15.426).

According to another embodiment, the method can also include transmitting the control signal from the mobile user device to a customer terminal through the router, wherein the customer terminal is locally connected to the plurality of independent home devices. The method also includes receiving the control signal at the customer terminal for controlling one or more of the plurality of independent home devices locally connected to the customer terminal. Further, the method includes transmitting the control signal from the customer terminal to at least one of the plurality of independent home devices.

According to another embodiment, the method can also include transmitting the control signal from the mobile user device to a HAS through the router, wherein the HAS is configured for controlling the at least one of the plurality of independent home devices. The method also includes receiving the control signal at the HAS, wherein the HAS is connected along the known communication path to at least one of the plurality of independent home devices. The method also includes transmitting the control signal from the HAS to the at least one of the plurality of independent home devices.

According to one or more embodiments the HAS can be used as a routing point similar to the proprietary router. According to another embodiment, the triggering event includes the mobile user device triggering a geofence boundary.

Further, the triggering event includes triggering event information that includes at least one selected from a group consisting of a user input, a geofence trigger signal, a scheduled instruction, a threshold sensor reading, and a third party request according to one or more embodiments.

According to one or more embodiments, the plurality of independent home devices includes at least one or more from a group consisting of a customer terminal, a thermostat, a mechanical servo device, a light switch, a video camera, a digital electronic device, a home appliance, a home audio device, a sensor array, and a security system sensor.

According to another embodiment, generating the control signal at the mobile user device includes deriving triggering event information from the triggering event and processing the triggering event information. The method also includes processing control information received from one or more of a group consisting of a user input, a geofence trigger signal, a scheduled instruction, a threshold sensor reading, a third party request, and a stored data file associated with the independent home device that is to be controlled and generating the control signal based on the triggering event information and control information.

According to another embodiment, transmitting the control signal from the mobile user device to at least one of the plurality of independent home devices through a network using a router by point-to-point communication through a known path of communication for the at least one of the plurality of independent home devices includes using a protocol translator in the router that takes the control signal and translates the control signal into a format readable by other devices in the known path of communication and the at least one of the plurality of independent home devices.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description has been presented for purposes of illustration and description, but is not intended to be exhaustive or limited to the embodiments in the form disclosed. Many modifications and variations will be apparent to those of ordinary skill in the art without departing from the scope of the disclosure. The embodiments were chosen and described in order to best explain the principles of the disclosure and the practical application, and to enable others of ordinary skill in the art to understand various embodiments with various modifications as are suited to the particular use contemplated.

The present embodiments may be a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Java, Smalltalk, C++, or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of one or more embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method of routing signals and controlling a plurality of home devices, the method comprising:
using a mobile device (1.04; 3.04; 5.04; 8.02; 9.04; 16.04, 16.04.2, 16.04.3) to detect a triggering event, the triggering event comprising a crossing by the mobile device of a specified geofence (1.06; 16.06) based on geolocation capability and geofence detecting capability of the mobile device; and
in response to the triggering event being detected,
the mobile device generating a control signal, wherein the control signal is a control signal for controlling each of the plurality of home devices and is associated with the triggering event; and
the mobile device transmitting the control signal to each of the plurality of home devices through a router (1.10.1, ..., 1.10.n; 3.14; 5.14; 8.10.1; 9.10.1) and a secure communication tunnel between the router and a customer terminal (1.02; 3.02; 5.02; 8.02; 9.02; 16.02) enabled to locally control the plurality of home devices (3.40; 5.40; 8.40; 9.40).

2. The method of claim 1, wherein the customer terminal is also enabled to control the plurality of home devices through a home automation server (HAS) (3.30; 5.30; 9.30).

3. A system for routing signals and controlling a plurality of home devices using a mobile device (1.04; 3.04; 5.04; 8.02; 9.04; 16.04, 16.04.2, 16.04.3), the system comprising:
a network (1.08, 1.09) comprising a plurality of communication points that provide a path of communication between connected devices, wherein the network is adapted to communicate via internet resources;
a plurality of home devices (3.40; 5.40; 8.40; 9.40) that are communicatively connected using the network;
a mobile device (1.04; 3.04; 5.04; 8.02; 9.04; 16.04, 16.04.2, 16.04.3) that is communicatively connected to each of the plurality of home devices using the network; and
a customer terminal (1.02; 3.02; 5.02; 8.02; 9.02; 16.02) configured to locally control the plurality of home devices (3.40, 5.40; 8.40; 9.40); and
a router (1.10.1, ..., 1.10.n; 3.14; 5.14; 8.10.1; 9.10.1) in the network through which the mobile device is able to connect to each of the plurality of home devices,
wherein the mobile device comprises a computer readable storage medium having program instructions embodied therewith, the program instructions being adapted to be executed by a processor of the mobile device to cause the processor to:
detect a triggering event at the mobile device, the triggering event comprising a crossing by the mobile device of a specified geofence (1.06; 16.06) based on geolocation capability and geofence detecting capability of the mobile device; and
in response to the triggering event being detected,
generate a control signal, wherein the control signal is a control signal for controlling each of the plurality of home devices and is associated with the triggering event; and
the router being configured to transmit the control signal via a secure communication tunnel with the customer terminal (1.02; 3.02; 5.02; 8.02; 9.02; 16.02) enabled for locally controlling the plurality of home devices.

4. The system of claim 3, wherein the system further comprises:
a home automation server (HAS) (3.30; 5.30; 9.30), wherein the customer terminal is further configured to control the plurality of home devices through the HAS.

## Patentansprüche

1. Verfahren zum Leiten von Signalen und Steuern einer Vielzahl von Heimvorrichtungen, wobei das Verfahren Folgendes umfasst:
Verwenden einer Mobilvorrichtung (1.04; 3.04; 5.04; 8.02; 9.04; 16.04, 16.04.2, 16.04.3) zum Ermitteln
eines Auslösungsereignisses, wobei das Auslösungsereignis ein Queren durch die Mobilvorrichtung eines bestimmten Geofence (1.06; 16.06) umfasst, basierend auf Geolokalisierungskapazität und Geofence-Erfassungskapazität der Mobilvorrichtung; und
in Reaktion auf Erfassen des Auslösungsereignisses
die Mobilvorrichtung ein Steuersignal erzeugt, wobei das Steuersignal ein Steuersignal zum Steuern jeder der Vielzahl von Heimvorrichtungen ist und mit dem Auslösungsereignis verknüpft ist; und
die Mobilvorrichtung das Steuersignal an jede der Vielzahl von Heimvorrichtungen durch einen Router (1.10.1, ..., 1.10.n; 3.14; 5.14; 8.10.1; 9.10.1) und einen sicheren Kommunikationstunnel zwischen dem Router und einem Kundenendgerät (1.02; 3.02; 5.02; 8.02; 9.02; 16.02) sendet, das freigegeben ist, um die Vielzahl von Heimvorrichtungen (3.40; 5.40; 8.40; 9.40) lokal zu steuern.

2. Verfahren nach Anspruch 1, wobei das Kundenendgerät auch freigegeben ist, die Vielzahl von Heimvorrichtungen durch einen Heimautomatisierungs-Server (HAS) (3.30; 5.30; 9.30) zu steuern.

3. System zum Leiten von Signalen und Steuern einer Vielzahl von Heimvorrichtungen unter Verwendung einer Mobilvorrichtung (1.04; 3.04; 5.04; 8.02; 9.04; 16.04, 16.04.2, 16.04.3), wobei das System Folgendes umfasst:
ein Netzwerk (1.08, 1.09), das eine Vielzahl von Kommunikationspunkten umfasst, die einen Kommunikationspfad zwischen verbundenen Vorrichtungen bereitstellen, wobei das Netzwerk zur Kommunikation über Internet-Ressourcen ausgebildet ist;
eine Vielzahl von Heimvorrichtungen (3.40; 5.40; 8.40; 9.40), die kommunikativ unter Verwendung des Netzwerks verbunden sind;
eine Mobilvorrichtung (1.04; 3.04; 5.04; 8.02; 9.04; 16.04, 16.04.2, 16.04.3), die kommunikativ mit jeder der Vielzahl von Heimvorrichtungen unter Verwendung des Netzwerks verbunden ist; und
ein Kundenendgerät (1.02; 3.02; 5.02; 8.02; 9.02; 16.02), das konfiguriert ist, die Vielzahl von Heimvorrichtungen (3.40, 5.40; 8.40; 9.40) lokal zu steuern; und
einen Router (1.10.1, ..., 1.10.n; 3.14; 5.14; 8.10.1; 9.10.1) in dem Netzwerk, durch den die Mobilvorrichtung jede der Vielzahl von Heimvorrichtungen verbinden kann,
wobei die Mobilvorrichtung ein computerlesbares Speichermedium mit Programmanweisungen umfasst, die darin eingebettet sind, wobei die Programmanweisungen ausgebildet sind, von einem Prozessor der Mobilvorrichtung ausgeführt zu werden, um den Prozessor zu Folgendem zu veranlassen:
Erfassen eines Auslösungsereignisses bei der Mobilvorrichtung, wobei das Auslösungsereignis ein Queren durch die Mobilvorrichtung eines bestimmten Geofence (1.06; 16.06) umfasst, basierend auf Geolokalisierungskapazität und Geofence-Erfassungskapazität der Mobilvorrichtung; und
in Reaktion auf Erfassen des Auslösungsereignisses
Erzeugen eines Steuersignals, wobei das Steuersignal ein Steuersignal zum Steuern jeder der Vielzahl von Heimvorrichtungen ist und mit dem Auslösungsereignis verknüpft ist; und
der Router konfiguriert ist, das Steuersignal über einen sicheren Kommunikationstunnel mit dem Kundenendgerät (1.02; 3.02; 5.02; 8.02; 9.02; 16.02) zu übertragen, das freigegeben ist, um die Vielzahl von Heimvorrichtungen lokal zu steuern.

4. System nach Anspruch 3, wobei das System weiter Folgendes umfasst:
einen Heimautomatisierungs-Server (HAS) (3.30; 5.30; 9.30), wobei das Kundenendgerät weiter konfiguriert ist, die Vielzahl von Heimvorrichtungen durch den HAS zu steuern.

## Revendications

1. Procédé de routage de signaux et de commande d'une pluralité de dispositifs domestiques, le procédé comprenant :
l'utilisation d'un dispositif mobile (1.04; 3.04; 5.04; 8.02; 9.04; 16.04, 16.04.2, 16.04.3) pour détecter
un événement déclencheur, l'événement déclencheur comprenant un franchissement par le dispositif mobile d'une géobarrière spécifiée (1.06; 16.06) sur la base d'une fonctionnalité de géopositionnement et d'une fonctionnalité de détection de géobarrière du dispositif mobile ; et
en réponse à la détection de l'événement déclencheur,
la génération par le dispositif mobile d'un signal de commande, dans lequel le signal de commande est un signal de commande pour commander chacun de la pluralité de dispositifs domestiques et est associé à l'événement déclencheur ; et
la transmission par le dispositif mobile du signal de commande vers chacun de la pluralité de dispositifs domestiques par l'intermédiaire d'un routeur (1.10.1, ..., 1.10.n ; 3.14; 5.14; 8.10.1 ; 9.10.1) et d'un tunnel de communication sécurisé entre le routeur et un terminal de client (1.02; 3.02; 5.02; 8.02; 9.02; 16.02) autorisé à commander localement la pluralité de dispositifs domestiques (3.40; 5.40; 8.40; 9.40).

2. Procédé selon la revendication 1, dans lequel le terminal de client est également autorisé à commander la pluralité de dispositifs domestiques par l'intermédiaire d'un serveur domotique (HAS) (3.30; 5.30; 9.30).

3. Système de routage de signaux et de commande d'une pluralité de dispositifs domestiques au moyen d'un dispositif mobile (1.04; 3.04; 5.04; 8.02; 9.04; 16.04, 16.04.2, 16.04.3), le système comprenant :
un réseau (1.08, 1.09) comprenant une pluralité de points de communication qui fournissent un trajet de communication entre des dispositifs connectés, dans lequel le réseau est adapté pour communiquer par l'intermédiaire de ressources Internet ;
une pluralité de dispositifs domestiques (3.40; 5.40; 8.40; 9.40) qui sont connectés de manière communicante au moyen du réseau ;
un dispositif mobile (1.04 ; 3.04 ; 5.04 ; 8.02 ; 9.04 ; 16.04, 16.04.2, 16.04.3) qui est connecté de manière communicante à chacun de la pluralité de dispositifs domestiques au moyen du réseau ; et
un terminal de client (1.02; 3.02; 5.02; 8.02; 9.02; 16.02) configuré pour commander localement la pluralité de dispositifs domestiques (3.40 ; 5.40 ; 8.40 ; 9.40) ; et
un routeur (1.10.1, ..., 1.10.n; 3.14; 5.14; 8.10.1; 9.10.1) dans le réseau par l'intermédiaire duquel le dispositif mobile peut se connecter à chacun de la pluralité de dispositifs domestiques,
dans lequel le dispositif mobile comprend un support de stockage lisible par ordinateur dans lequel des instructions de programme sont incorporées, les instructions de programme étant adaptées pour être exécutées par un processeur du dispositif mobile pour amener le processeur à :
détecter un événement déclencheur au niveau du dispositif mobile, l'événement déclencheur comprenant un franchissement par le dispositif mobile d'une géobarrière spécifiée (1.06; 16.06) sur la base d'une fonctionnalité de géopositionnement et d'une fonctionnalité de détection de géobarrière du dispositif mobile ; et
en réponse à la détection de l'événement déclencheur,
générer un signal de commande, dans lequel le signal de commande est un signal de commande pour commander chacun de la pluralité de dispositifs domestiques et est associé à l'événement déclencheur ; et
le routeur étant configuré pour transmettre le signal de commande par l'intermédiaire d'un tunnel de communication sécurisé, le terminal de client (1.02 ; 3.02; 5.02; 8.02 ; 9.02; 16.02) étant autorisé à commander localement la pluralité de dispositifs domestiques.

4. Système selon la revendication 3, dans lequel le système comprend en outre :
un serveur domotique (HAS) (3.30 ; 5.30; 9.30), dans lequel le terminal de client est en outre configuré pour commander la pluralité de dispositifs domestiques par l'intermédiaire du HAS.
